# EUROPÄISCHE PATENTSCHRIFT

(11) **EP 1 431 649 B1**
(45) Veröffentlichungstag und Bekanntmachung des Hinweises auf die Patenterteilung: **02.04.2008**
(21) Anmeldenummer: 03025127.6
(22) Anmeldetag: 03.11.2003
(51) Int. Cl.: F16L 47/32, F16L 47/30, F16L 37/138, F16L 47/03

(54) **T-Stück aus Kunststoff**
Plastic T-branch unit
Raccord plastique sous forme de T

(30) Priorität: 18.12.2002 DE 10259143
(43) Veröffentlichungstag der Anmeldung: 23.06.2004
(73) Patentinhaber: Reinert - Ritz GmbH, 48531 Nordhorn (DE)
(72) Erfinder: Ritz, Michael, Dipl.-Ing., 48527 Nordhorn (DE)
(74) Vertreter: Ostriga, Sonnet, Wirths & Roche

(56) Entgegenhaltungen:
- CH-A- 423 209
- DE-A- 4 305 609
- GB-A- 1 408 844
- US-A- 3 542 405

## Beschreibung

Die Erfindung betrifft ein T-Stück aus Kunststoff zum Anschluss eines abgehenden Rohres an eine Rohrleitung, wobei das T-Stück zwei in Flucht liegende erste und zweite Rohrstutzen aufweist, die von einer zentralen Verstärkung ausgehen, an der ein dritter Rohrstutzen mit zu den ersten und zweiten Rohrstutzen im wesentlichen senkrechter Orientierung ausgebildet ist, an welchem zum Anschluss des abgehenden Rohres ein Verbindungs-Rohrstück mittels Heizelement-Stumpfschweißung angebracht ist.

T-Stücke aus Kunststoff werden zur Erzeugung von Rohrabgängen in Rohrleitungen zum Transport von Fluiden wie z.B. Gas oder Wasser eingesetzt. Nach DIN 16962/63 sind solche T-Stücke aus Polyethylen (PE) oder Polypropylen (PP) gefertigt.

Im Anschlussbereich des abgehenden Rohres, also im Zentrum des T-Stücks, müssen die Wandungen wegen der auftretenden Innendruckverhältnisse verstärkt sein. Bekannt sind im wesentlichen drei wichtige Herstellungsverfahren für T-Stücke aus Kunststoff.

Bei dem ersten Verfahren wird ein komplettes T-Stück im Spritzgießverfahren erzeugt. Dies ist wegen der kostspieligen Spritzgießwerkzeuge ein relativ aufwendiges Verfahren, das sich auch nur für T-Stücke eignet, die gewisse Dimensionen nicht überschreiten.

Das zweite Verfahren ist z.B. aus DE 34 04 294 C1bekannt. Bei der Herstellung von Rohrformstücken aus einem thermoplastischen Kunststoff wird ein zuvor auf Länge geschnittener extrudierter Rohrkörper über einen wesentlichen Teil seiner Länge durch mehrlagiges Umwickeln mit extrudiertem Bandmaterial aus thermoplastischem Kunststoff unter Ausbildung eines im wesentlichen zylindrischen Kragens radial nach außen verstärkt. Das Bandmaterial wird beim Umwickeln des Rohrkörpers erhitzt, um die Lagen des Bandmaterials sowohl mit dem Rohrkörper als auch untereinander fest zu verschweißen. Nach Fertigstellung des Kragens an dem Rohrkörper werden im Kragen nach Erkalten des Bandmaterials Abzweigbohrungen quer bzw. winklig zur Achse des Rohrkörpers hergestellt und der Kragen außerdem spanend bearbeitet, wobei der Kragen an jedem seiner beiden axialen Enden unter Bildung einer Hohlkehle stirnseitig abgedreht wird.

Vor der Herstellung der Abzweigbohrungen wird der Kragen zunächst im Bereich des herzustellenden Anschlussstutzens parallel zur Achse des Rohrkörpers und im Bereich an der gegenüberliegenden Seite winklig zur Rohrachse flach abgedreht. Anschließend wird an dem Kragen jeweils rings um die Abzweigbohrungen der im wesentlichen zylindrische Anschlussstutzen hergestellt. Der Querschnitt jedes der angedrehten Anschlussstutzen entspricht dabei dem Querschnitt eines abgehenden Rohrstranges, so dass diese Rohrstränge durch einfaches Stumpfschweißen mit dem Rohrformstück fest und dauerhaft verbunden werden können.

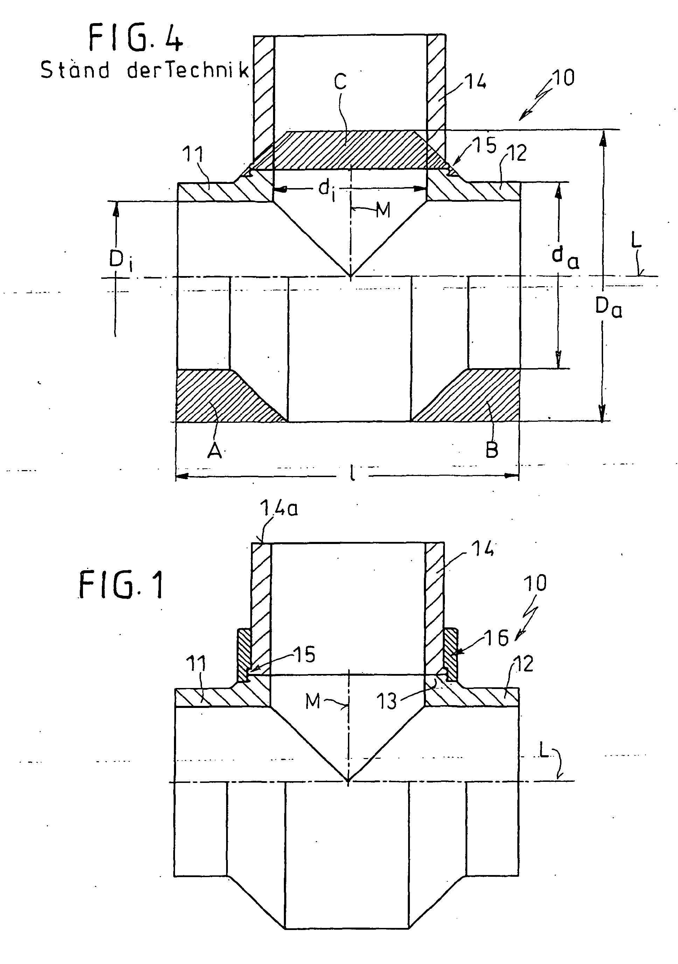

Bei dem dritten Verfahren wird ein Hohlstab spanabhebend bearbeitet, wie es nunmehr anhand von Fig. 4 beschrieben wird:

Ausgangsmaterial für das insgesamt mit 10 bezeichnete T-Stück ist ein Hohlstab aus PE bzw. PP der Länge I sowie mit einem Innendurchmesser Dᵢ und einem Außendurchmesser Dₐ. Zur Bildung des ersten Rohrstutzens 11 und des zweiten, mit diesem in Flucht der nicht dargestellten Rohrleitung liegenden, Rohrstutzens 12 wird der Außenmantel des Hohlstabs an den beiden Enden abgedreht und dadurch die jeweils ringförmigen, in Fig. 4 schraffierten Werkstoffbereiche A und B entfernt. Es entsteht somit zunächst ein Rotationskörper mit einer Außenkontur, wie sie aus der unteren Hälfte der Fig. 4 erkennbar ist. An der Seite, an der das abzweigende Rohr anzubringen ist, wird eine ebene, zur Längsachse L der Rohrleitung parallele Abfräsung vorgenommen, mit der der mit C bezeichnete schraffierte Werkstoffbereich entfernt wird. Anschließend wird im Zentrum dieser Abfräsung die Wand durchbohrt, wodurch eine kreisrunde Anschlussöffnung mit dem Innendurchmesser dᵢ entsteht, dessen Mittelpunkt in der Mittellinie M des abgehenden Rohres liegt. Ein abschließendes Überfräsen des in Fig. 4 oben über den Mantel der Rohrstutzen 11 und 12 überstehenden Materials führt schließlich zu einem sehr kurzen dritten Rohrstutzen 13.

In der Regel ist der Innendurchmesser dᵢ des dritten Rohstutzens 13 gleich dem Innendurchmesser Dᵢ der ersten und zweiten Rohrstutzen 11, 12 und der Außendurchmesser des dritten Rohstutzens 13 gleich dem Außendurchmesser dₐ der ersten und zweiten Rohrstutzen 11, 12. Dadurch können die an drei Seiten an das T-Stück anzuschließenden Rohre bzw. Rohrleitungen dieselbe Nenngröße aufweisen.

Mittels Heizelement-Stumpfschweißung wird schließlich an die Stirnseite des kurzen dritten Rohrstutzens 13 ein im Querschnitt gleich bemaßtes Rohrstück 14 angeschweißt, wobei sich mantelaußenseitig ein im wesentlichen umlaufender Schweißwulst 15 ergibt.

Solchermaßen hergestellte T-Stücke, von der vorliegende Erfindung ausgeht, lassen sich relativ kostengünstig auch in größeren Dimensionen erzeugen und haben sich in der Praxis sehr bewährt.

Dauerfestigkeitsprüfungen haben indes gezeigt, dass insbesondere im Bereich des Anschlusses des dritten Rohrstücks 14 nach vielen Jahren Dauerbetriebs einer unter Innendruck stehenden Fluidleitung möglicherweise mit Ausbeulungen zu rechnen ist, was letztlich zu einer Beschädigung des T-Stücks bis hin zur Zerstörung führen könnte.

Aufgabe der Erfindung ist es, ein T-Stück so zu gestalten, dass diese drohende Gefahr vermieden wird, wobei es der Erfindung des weiteren wesentlich darauf ankommt, nicht mehr Kunststoffmaterial verwenden oder auf erhöhte Wandstärken zurückgreifen zu müssen.

Die Erfindung löst diese Aufgabe durch die Merkmale des Anspruches 1 und ist dem entsprechend dadurch gekennzeichnet, dass der Übergangsbereich zwischen dem dritten Rohrstutzen und dem daran angeschweißten Rohrstück von einem Verstärkungsring umfasst ist, der den Rohrstutzen und einen daran anschließenden axialen Bereich des Verbindungs-Rohrstücks außenmantelseitig eng umschließt.

Zur Verwirklichung der Erfindung bedarf es demnach lediglich des auf das Rohrstück aufgeschobenen und den Schweiß-Verbindungsbereich eng umschließenden Verstärkungsringes. Dieser Verstärkungsring besteht vorzugsweise, wie das T-Stück, aus PE bzw. PP. Vergleichsmessungen haben erwiesen, dass durch diese technisch überaus einfache Maßnahme die gestellte Aufgabe äußerst befriedigend gelöst wird. Hervorzuheben ist in diesem Zusammenhang, dass das T-Stück ansonsten vollständig oder doch nahezu vollständig dem bisherigen Stand der Technik entspricht. Deshalb ist es auch möglich, bereits existierende T-Stücke dieser bekannten Bauart nachträglich ohne weiteres im Sinne höherer Stabilität und Dauerbetriebsfestigkeit auf einfachste Art nachrüsten zu können.

In weiterer Ausgestaltung dieses erfindungsgemäßen Prinzips kann der Innendurchmesser des Verstärkungsringes und der Außendurchmesser des Verbindungs-Rohrstücks zueinander ein Gleitspiel aufweisen, so dass ein händisches Überschieben des Verstärkungsringes über das Verbindungs-Rohrstück möglich ist, der Verstärkungsring also werkzeuglos anbringbar ist.

Des weiteren besteht ein vorteilhaftes Merkmal darin, dass im Schweißanschlussbereich zwischen dem dritten Rohrstutzen und dem Verbindungs-Rohrstück ein umlaufender Schweißwulst ausgebildet ist, der von dem Verstärkungsring umfasst ist, wobei der Verstärkungsring an seinem dem dritten Rohrstutzen zugewandten Endabschnitt eine Aufnahmetasche für den Schweißwulst ausbilden kann.

Entsprechend einer erfindungsgemäßen Weiterbildung kann die Aufnahmetasche als hinterschnittene Ringnut ausgebildet sein, die stirnseitig von wenigstens einem nach innen weisenden Kragenabschnitt begrenzt ist, der den Schweißwulst im wesentlichen form- bzw. rastschlüssig hinterfängt. Hiermit ist eine überaus einfache selbstsichernde Fixierung des Verstärkungsringes erzielt, die im übrigen so beschaffen sein kann, dass sich der Verstärkungsring aus seiner Verankerung nicht mehr ohne Zuhilfenahme von Werkzeug entfernen lässt. Im übrigen kann der wenigstens eine Kragenabschnitt als umlaufender Ringkragen ausbildet sein.

Die Erfindung versteht sich im übrigen am besten anhand der nachfolgenden Beschreibung eines in den Zeichnungen dargestellten Ausführungsbeispiels. In den Zeichnungen zeigen:
- Fig. 1: in teilweisem Längsschnitt ein entsprechend der Erfindung mit einem Verstärkungsring versehenes T-Stück,
- Fig. 2: eine gegenüber Fig. 1 vergrößert widergegebene Ausschnittsdarstellung im Anschlussbereich des Rohrstücks,
- Fig. 3: einen Längsschnitt durch den Verstärkungsring und
- Fig. 4: das oben bereits eingehend erläuterte T-Stück nach dem Stand der Technik.

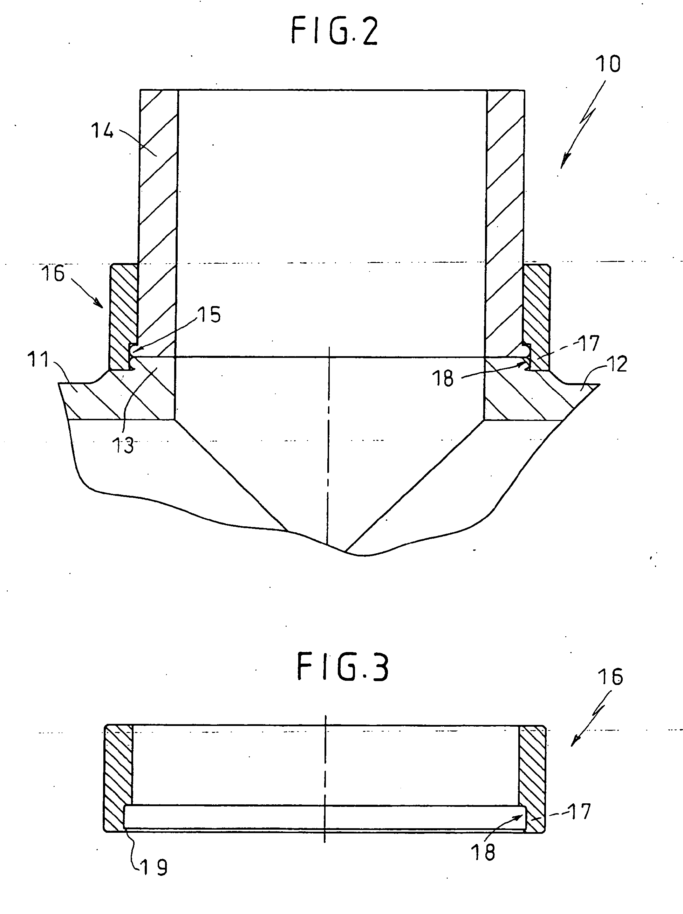

Das in den Fig. 1 bis 3 gezeigte T-Stück 10 entspricht zunächst nahezu vollständig dem T-Stück nach dem Stand der Technik wie in Fig. 4 dargestellt. Wie dort sind auch hier der erste Rohrstutzen 11, der zweite Rohrstutzen 12 sowie der dritte Rohrstutzen 13 mit dem daran angeschweißten Rohrstück 14 vorhanden. Erfindungswesentlich ist ein mit 16 bezeichneter Verstärkungsring.

Der Verstärkungsring 16, vorzugsweise durch spanende Bearbeitung aus einem abgelängten Abschnitt eines Hohlstabes gewonnen, wird von der Endstirnseite 14a des Rohrstücks 14 auf dieses aufgeschoben, bis es am mittigen Zentralabschnitt des T-Stücks 10 anschlägt. Da das Überschieben des Verstärkungsringes 16 nach Möglichkeit von Hand ausgeführt werden sollte, besteht vorzugsweise zwischen dem Innendurchmesser des Verstärkungsrings 16 und dem Außendurchmesser des Rohrstücks 14 ein hinreichendes Gleitbewegungsspiel, allenfalls eine leichte Klemmpassung.

Der Verstärkungsring 16 weist in seinem einen Endbereich 17 eine taschenartige Innenausnehmung 18 auf. Mit dieser übergreift er den Schweißwulst 15. Bei einer bevorzugten Ausführungsform befindet sich an der äußersten Stirnseite der Aufnahmetasche 18 und des Verstärkungsrings 16 ein nach einwärts ragender Kragen 19, der - nach vorheriger vorübergehender Aufweitung beim Überrasten über den Schweißwulst 15 - in der Endmontagelage den Schweißwulst 15 hinterfängt, welcher sodann in der hinterschnittenen Ringnut, die die Aufnahmetasche vorzugsweise ausbildet, angeordnet bleibt.

Zwar zeigen die Figuren das T-Stück stark verkleinert, jedoch hinsichtlich aller Abmessungen in den richtigen Proportionen. Daraus ist erkennbar, dass der Verstärkungsring ein recht kleines und - im Vergleich mit dem Rohrstück 14 - auch relativ kurzes Bauteil darstellt.

## Patentansprüche

1. T-Stück und Verbindungs-Rohrstück, wobei das T-Stück (10) aus Kunststoff zum Anschluss eines abgehenden Rohres an eine Rohrleitung geeignet ist, wobei das T-Stück (10) zwei in Flucht liegende erste und zweite Rohrstutzen (11, 12) aufweist, die von einer zentralen Verstärkung ausgehen, an der ein dritter Rohrstutzen (13) mit zu den ersten und zweiten Rohrstutzen (11, 12) im wesentlichen senkrechter Orientierung ausgebildet ist, an welchem ein Verbindungs-Rohrstück (14) mittels Heizelement-Stumpfschweißung angebracht ist, das dem Anschluss des abgehenden Rohres dient, **dadurch gekennzeichnet, dass** der Übergangsbereich zwischen dem dritten Rohrstutzen (13) und dem daran angeschweißten Verbindundungs-Rohrstück (14) von einem Verstärkungsring (16) umfasst ist, der den Rohrstutzen (13) und einen daran anschließenden axialen Bereich des Verbindungs-Rohrstücks (14) außenmantelseitig eng umschließt.

2. T-Stück und Verbindungs-Rohrstück nach Anspruch 1, **dadurch gekennzeichnet, dass** der Innendurchmesser des Verstärkungsringes (16) und der Außendurchmesser des Verbindungs-Rohrstücks zueinander ein Gleitspiel aufweisen, so dass ein händisches Überschieben des Verstärkungsringes (16) über das Verbindungs-Rohrstück (14) möglich ist.

3. T-Stück und Verbindungs-Rohrstück nach Anspruch 1 oder 2, **dadurch gekennzeichnet, dass** im Schweißanschlussbereich zwischen dem dritten Rohrstutzen (13) und dem Verbindungs-Rohrstück (14) ein umlaufender Schweißwulst (15) ausgebildet ist, der von dem Verstärkungsring (16) umfasst ist.

4. T-Stück und Verbindungs-Rohrstück nach Anspruch 3, **dadurch gekennzeichnet, dass** der Verstärkungsring (16) an seinem dem dritten Rohrstutzen (13) zugewandten Endabschnitt eine Aufnahmetasche (18) für den Schweißwulst (15) ausbildet.

5. T-Stück und Verbindungs-Rohrstück nach Anspruch 4, **dadurch gekennzeichnet, dass** die Aufnahmetasche (18) als hinterschnittene Ringnut ausgebildet ist, die stirnseitig von wenigstens einem nach innen weisenden Kragenabschnitt (19) begrenzt ist, der den Schweißwulst (15) im wesentlichen form- bzw. rastschlüssig hinterfängt.

6. T-Stück und Verbindungs-Rohrstück nach Anspruch 5, **dadurch gekennzeichnet, dass** der wenigstens eine Kragenabschnitt (19) als umlaufender Ringkragen ausbildet ist.

7. T-Stück und Verbindungs-Rohrstück nach einem der Ansprüche 4 bis 6, **dadurch gekennzeichnet, dass** die axiale Erstreckung der Aufnahmetasche (18) etwa einem Fünftel bis einem Viertel der gesamten Axiallänge des Verstärkungsringes (16) beträgt.

## Claims

1. Tee joint and pipe adapter, wherein the tee joint (10) made of plastics material is suitable for connecting an outgoing pipe to a pipeline, wherein the tee joint (10) comprises two aligned first and second pipe sockets (11, 12) that emanate from a central reinforcement, on which there is formed with an orientation substantially perpendicular to the first and second pipe sockets (11, 12) a third pipe socket (13), to which there is attached by means of heated-tool butt welding a pipe adapter (14), which is used to connect the outgoing pipe, **characterized in that** the transition region between the third pipe socket (13) and the pipe adapter (14) welded thereon is encircled by a reinforcing ring (16), which tightly surrounds the outer lateral surface of the pipe socket (13) and an axial region of the pipe adapter (14) adjacent thereto.

2. Tee joint and pipe adapter according to claim 1, **characterized in that** the inside diameter of the reinforcing ring (16) and the outside diameter of the pipe adapter have sliding clearance relative to one another, thereby allowing the reinforcing ring (16) to be slipped manually over the pipe adapter (14).

3. Tee joint and pipe adapter according to claim 1 or 2, **characterized in that** in the region of the welded joint between the third pipe socket (13) and the pipe adapter (14) a circumferential weld bead (15) is formed, which is encircled by the reinforcing ring (16).

4. Tee joint and pipe adapter according to claim 3, **characterized in that** the reinforcing ring (16) on its end portion facing the third pipe socket (13) forms a receiving pocket (18) for the weld bead (15).

5. Tee joint and pipe adapter according to claim 4, **characterized in that** the receiving pocket (18) takes the form of an undercut annular groove, which is delimited at the front by at least one inwardly directed collar portion (19), which catches in a substantially positive- and/or detent-locking manner behind the weld bead (15).

6. Tee joint and pipe adapter according to claim 5, **characterized in that** the at least one collar portion (19) takes the form of a circumferential annular collar.

7. Tee joint and pipe adapter according to one of claims 4 to 6, **characterized in that** the axial extent of the receiving pocket (18) is approximately a fifth to a quarter of the total axial length of the reinforcing ring (16).

## Revendications

1. Raccord en forme de T et pièce tubulaire de liaison, le raccord en forme de T (10), réalisé en matière synthétique, convenant pour le raccordement d'un tube de départ à une tuyauterie, le raccord en T (10) présentant deux première et deuxième tubulures (11, 12) situées en alignement, partant d'un renforcement central, sur lequel une troisième tubulure (13) est réalisée, avec une orientation sensiblement perpendiculaire aux première et deuxième tubulures (11, 12), troisième tubulure sur laquelle une pièce tubulaire de liaison (14), qui sert au raccordement du tube de départ, est montée, par un soudage bout à bout effectué avec un élément de chauffage, **caractérisé en ce que** la zone de transition, entre la troisième tubulure (13) et la pièce tubulaire de liaison (14) soudée sur elle, est entourée par une bague de renforcement (16), qui entoure étroitement, du côté enveloppe extérieure, la tubulure (13) et une zone axiale, s'y raccordant, de la pièce tubulaire de liaison (14).

2. Raccord sous forme de T et pièce tubulaire de liaison, selon la revendication 1, **caractérisé en ce que** le diamètre intérieur de la bague de renforcement (16) et le diamètre extérieur de la pièce tubulaire de liaison présentent entre eux un jeu de glissement, de manière qu'un coulissement par le dessus, à la main, de la bague de renforcement (16) sur la pièce tubulaire de liaison (14) soit possible.

3. Raccord sous forme de T et pièce tubulaire de liaison, selon la revendication 1 ou 2, **caractérisé en ce que**, dans la zone de raccordement par soudage, entre la troisième tubulure (13) et la pièce tubulaire de liaison (14) est réalisé un bourrelet de soudage (15) de pourtour, entouré par la bague de renforcement (16).

4. Raccord sous forme de T et pièce tubulaire de liaison, selon la revendication 3, **caractérisé en ce que** la bague de renforcement (16), sur son tronçon d'extrémité tourné vers la troisième tubulure (13), forme une poche de logement (14) pour le bourrelet de soudure (15).

5. Raccord sous forme de T et pièce tubulaire de liaison, selon la revendication 4, **caractérisé en ce que** la poche de logement (18) est réalisée sous la forme de gorge annulaire à contre-dépouille, limitée du côté frontal par au moins un tronçon formant collerette (19) tourné vers l'intérieur, saisissant par l'arrière, sensiblement par une liaison à ajustement de forme ou à encliquetage, le bourrelet de soudage (15).

6. Raccord sous forme de T et pièce tubulaire de liaison, selon la revendication 5, **caractérisé en ce que** le au moins un tronçon formant collerette (19) est réalisé sous la forme de collerette annulaire de pourtour.

7. Raccord sous forme de T et pièce tubulaire de liaison, selon l'une des revendications 4 à 6, **caractérisé en ce que** l'étendue axiale de la poche de logement (18) fait à peu près un cinquième, jusqu'à un quart, de l'ensemble de la longueur axiale de la bague de renforcement (16).
